# EUROPÄISCHE PATENTANMELDUNG

(11) **EP 3 582 363 A1**
(43) Veröffentlichungstag der Anmeldung: **18.12.2019**
(21) Anmeldenummer: 19178094.9
(22) Anmeldetag: 04.06.2019
(51) Int. Cl.: H02J 7/14, H02K 5/00, H02K 21/00, H02P 9/48, H02P 9/26

(54) **ELEKTRISCHE GENERATOREINRICHTUNG ZUM EINSATZ IN KRAFTFAHRZEUGEN**

(30) Priorität: 14.06.2018 DE 102018209600
(71) Anmelder: KW-Generator GmbH & Co. KG, 73527 Schwäbisch Gmünd (DE)
(72) Erfinder: Werner, Michael, 73572 Heuchlingen (DE); Kurz, Michael, 73565 Spraitbach (DE)
(74) Vertreter: advotec.

(57) **Zusammenfassung**

Eine elektrische Zusatzversorgungseinrichtung zum Einsatz in Kraftfahrzeugen, beispielsweise zur Versorgung eines Kühlaggregates (9) umfasst
- einen von einem Antriebsmotor (1) des Kraftfahrzeuges antreibbaren Permanentmagnet-Generator (12),
- eine Bauweise des Permanentmagnet-Generators (12) mit einer Kapselung in Schutzart IP54 oder höher sowie einer Baugröße entsprechend einer für das jeweilige Kraftfahrzeug üblichen Lichtmaschine,
- ein Drehspannungswicklungspaket des Permanentmagnet-Generators (12), dessen jeweils einer Phase zugeordneten Drehspannungswicklungen jeweils in Unterwicklungen unterteilt sind, die untereinander und/oder zu ihrem Phasenanschluss hin über getrennt ansteuerbare, eine Umschalteinrichtung (13) bildende Schalter verbunden sind, sowie
- eine Steuereinrichtung (16) zur Ansteuerung der Schalter.

## Beschreibung

Die vorliegende Patentanmeldung nimmt die Priorität der deutschen Patentanmeldung DE 10 2018 209 600.7 in Anspruch, deren Inhalt durch Bezugnahme hierin aufgenommen wird.

Die Erfindung betrifft eine elektrische Zusatzversorgungseinrichtung zum Einsatz in Kraftfahrzeugen.

Zum Hintergrund der Erfindung ist festzuhalten, dass für vielerlei Anwendungsfälle auf Kraftfahrzeugen, insbesondere Nutzfahrzeugen, wie beispielsweise Kleintransportern, eine stabile Stromversorgung von 230 V / 50Hz bzw. 400 V / 50Hz benötigt wird. Als ein Beispiel sind Kühltransporter mit entsprechenden Kühlaggregaten oder Feuerwehrfahrzeuge mit Pumpen, Winden oder dergleichen zu nennen.

Zu diesem Zweck ist es derzeit üblich, eine Standard-Lichtmaschine zu verwenden, die in ihrer Wicklungszahl an den jeweiligen Einsatzzweck angepasst, also gegebenenfalls umgewickelt, und zusätzlich zur eigentlichen Lichtmaschine des Kraftfahrzeuges dort eingebaut wird. Oftmals sind Einbaumöglichkeiten für eine solche zusätzliche Lichtmaschine schon ab Werk vorbereitet. Auch werden von Drittanbietern entsprechende Einbau-Sätze mit Haltewinkeln, Halteschienen, angepassten Keilriemen, Umlenkrollen usw. angeboten.

Die zusätzliche Lichtmaschine liefert üblicherweise eine geregelte Ausgangsspannung mit variabler Frequenz. Diese Spannung versorgt einen nachgeschalteten Inverter, der die Spannung in Form, Qualität und Höhe der entsprechenden Norm anpasst, wie beispielsweise übliche 230 V, 50 Hz und einer Güte von THD < 5 %.

Lichtmaschinen sind generell in Schutzart IP23 aufgebaut, woran sich auch nach einer gegebenenfalls durchgeführten Umwicklung nichts ändert. Damit besteht bei einer Ausrüstung eines Fahrzeuges mit einer solchen elektrischen Zusatzversorgungseinrichtung das erhöhte Risiko durch Feuchtigkeits-, Fremdkörper-, Öl- oder Schmutzeintrag einen Isolationsfehler gegen Fahrzeugmasse zu generieren. Ein solcher Isolationsfehler birgt Gefahren, da beispielsweise bei Feuerwehrfahrzeugen, die im Rettungseinsatz Hilfe unter Anwendung großer Mengen von Wasser leisten, die elektrische Sicherheit im und am Fahrzeug nicht mehr gewährleistet ist.

Der Einsatz eines geregelten Synchrongenerators in Schutzart IP54 und höher anstelle einer Lichtmaschine ist hier nicht möglich, da die Baugröße des Generators das verfügbare Einbaumaß deutlich überschreitet. Auch ein herkömmlicher Permanentmagnet-Generator kann nicht eingesetzt werden, da seine Ausgangsspannung linear zur Antriebsdrehzahl und somit nicht geeignet ist, beispielsweise einen nachgeschalteten Umrichter zu speisen.

Ausgehend von der geschilderten Problematik des Standes der Technik liegt der Erfindung die Aufgabe zugrunde, eine elektrische Zusatzversorgungseinrichtung zum Einsatz in Kraftfahrzeugen in ihrer universellen Einsetzbarkeit und unter sicherheitstechnischen Aspekten zu verbessern.

Diese Aufgabe wird durch die im Patentanspruch 1 angegebenen Merkmale gelöst. Demnach umfasst die elektrische Zusatzversorgungseinrichtung:
- einen von einem Antriebsmotor des Kraftfahrzeuges antreibbaren Permanentmagnet-Generator mit einer Kapselung in Schutzart IP54 oder höher sowie einer Baugröße entsprechend einer für das jeweilige Kraftfahrzeug üblichen Lichtmaschine,
- eine Steuereinrichtung zur Ansteuerung der Schalter,
- eine mit der Steuereinrichtung verbundene Erfassungseinrichtung zur zumindest mittelbaren Erfassung des jeweiligen Betriebszustandes des Antriebsmotors oder der erzeugten Generatorspannung, sowie
- eine Ansteuerung der Schalter in Abhängigkeit des erfassten Betriebszustandes des Antriebsmotors oder der erfassten Generatorspannung, derart, dass durch Ein-, Aus- und/oder Zusammenschalten von einzelnen oder Gruppen der jeweiligen Unterwicklungen der Drehspannungswicklungen an den Phasenleitern des Permanentmagnet-Generators eine Ausgangsspannung in einem Soll-Spannungsbereich liegt.

Der Erfindungsgegenstand hat damit den Vorteil, dass die Zusatzversorgungseinrichtung in ähnlicher Baugröße wie eine übliche Lichtmaschine realisiert und damit im jeweiligen Kraftfahrzeug an der üblichen, vorgesehenen Einbauposition zu installieren bzw. nachzurüsten ist. Darüber hinaus ist aufgrund der Schutzart IP54 insbesondere ein gegenüber üblichen Lichtmaschine deutlich höherer Feuchtigkeitsschutz gegeben, was einen universellen Einsatz der Zusatzversorgungseinrichtung unter entsprechenden sicherheitstechnischen Verbesserungen begünstigt. Diese durch Kapselung zu erreichende Schutzklasse ist bei einem Permanentmagnet-Generator realisierbar, da dieser eine deutlich geringere Wärmeentwicklung als beispielsweise ein vergleichbarer Synchrongenerator aufweist. Damit ist keine durch Luftaustausch von innen nach außen realisierte Kühlung notwendig. Allenfalls muss der Permanentmagnet-Generator über die geschlossene Außenhaut forciert mit Luft, Wasser oder Öl gekühlt werden.

Der Vorteil eines Permanentmagnet-Generators mit Umschalttechnik, wie sie durch die vorstehend umrissene Ansteuerung der Schalter durch Ein-, Aus- und/oder Zusammenschalten von einzelnen oder Gruppen der jeweiligen Unterwicklungen realisiert ist, liegt wiederum in seiner Kompaktheit und damit die Möglichkeit, eine solche Zusatzversorgungseinrichtung in Lichtmaschinen-Baugröße zu realisieren. Dabei ist zwar die resultierende Spannung nicht völlig stabil geregelt, jedoch mit einer solchen Güte zu realisieren, dass damit unterschiedliche Verbrauchern ausreichend mit elektrische Energie versorgt werden können.

In den abhängigen Ansprüchen sind bevorzugte Weiterbildungen des Erfindungsgegenstandes angegeben. So sind vorteilhafter Weise die Anschlüsse der Unterwicklungen aus dem Stator des Permanentmagnet-Generators herausgeführt, um außen am Generator in gut zugänglicher Weise die Schalter zu positionieren.

Eine schaltungstechnische Vereinfachung kann dadurch erreicht werden, dass die Drehspannungswicklungen sternförmig verschaltet sind und die jeweils erste Unterwicklung der einzelnen Phasen direkt mit dem Sternpunkt verbunden ist.

In bevorzugter Weiterbildung der Erfindung kann die Erfassungseinrichtung zur Erfassung des jeweiligen Betriebszustandes des Antriebsmotors nur die an einer einzelnen Unterwicklung erzeugte Wechselspannung oder deren Frequenz erfassen. Da diese Erfassungsgröße repräsentativ für alle Phasen ist, genügt der Zugriff auf eine Phase, was für eine weitere Vereinfachung der Generatoranordnung sorgt.

Mit derselben Zielrichtung können die Drehspannungswicklungen mit ihren Unterwicklungen und deren Beschaltung mit den Schaltern bezüglich der einzelnen Phasen zueinander identisch aufgebaut sein.

Als Schalter kommen bevorzugt Halbleiterschalter oder mechanische Schalter/Schütze zum Einsatz.

Schließlich können die Drehspannungswicklungen durch jeweils drei seriell geschaltete Unterwicklungen realisiert werden, was im Hinblick auf die Zahl von Unterwicklungen einen guten Kompromiss zwischen möglichst geringem Schaltungsaufwand und Abdeckung unterschiedlicher Betriebszustände bzw. Betriebsdrehzahlen des Antriebsmotors herstellt. Zur Vermeidung unnötiger Wiederholungen wird hierzu auf die folgende Beschreibung des Ausführungsbeispiels verwiesen.

Zur besseren Anpassung der Schaltungsmöglichkeiten an die abzudeckenden Betriebsdrehzahlen können die Unterwicklungen einer Drehspannungswicklung unterschiedliche Windungszahlen aufweisen, die sich beispielsweise zueinander wie ganzzahlige Vielfache verhalten.

Weitere bevorzugte Ausführungsformen der Erfindung betreffen die Verwendbarkeit der Zusatzversorgungseinrichtung, wie beispielsweise
- zur Speisung eines Ladereglers zur Energieversorgung einer Batterie für einen Gleichspannungsverbraucher,
- zur Erzeugung einer netzkonformen Spannung für einen Wechselspannungsverbraucher über einen einfachen Inverter,
- zur Speisung eines Gleichspannungsreglers für eine konstante Gleichspannung, oder
- zur direkten Speisung von Zusatzaggregaten auf Kraftfahrzeugen, beispielsweise von Kühlaggregaten, Pumpen, Winden und dergleichen.

Weitere Merkmale, Einzelheiten und Vorteile der Erfindung ergeben sich aus der nachfolgenden Beschreibung von Ausführungsbeispielen anhand der beigefügten Zeichnungen. Es zeigen:
- Fig. 1 bis 4: schematische Darstellungen der Einbausituation einer elektrischen Zusatzversorgungseinrichtung in einem Fahrzeug in unterschiedlichen Anwendungsbeispiel, und
- Fig. 5: ein Schaltbild des Drehspannungswicklungspakets des Permanentmagnet-Generators der Zusatzversorgungseinrichtung.

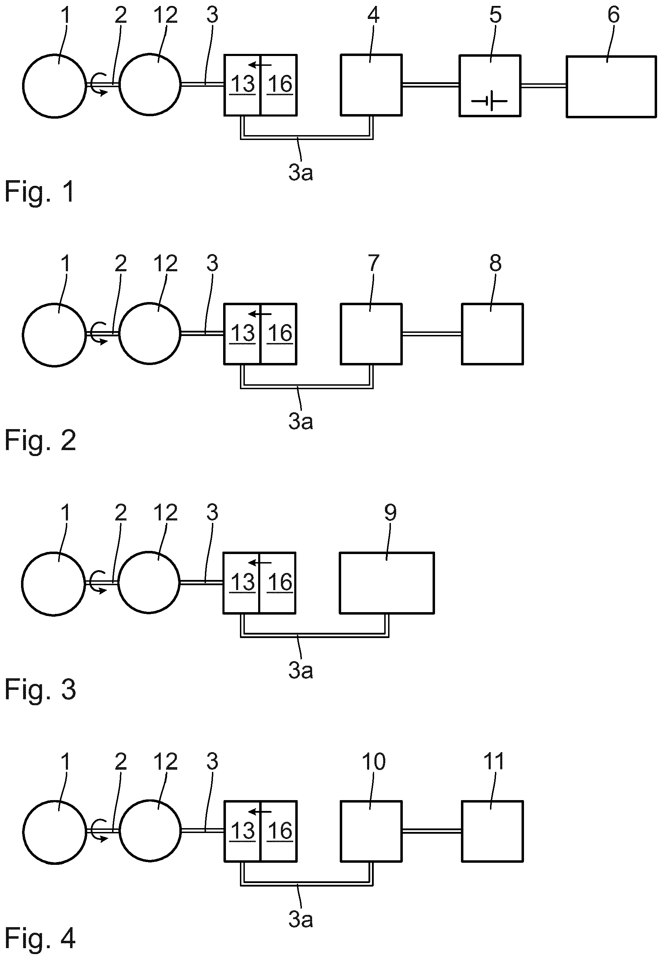

Wie aus den Fig. 1 bis 4 deutlich wird, weist ein nicht näher dargestelltes Kraftfahrzeug beispielsweise in Form eines Kleintransporters einen Antriebsmotor 1 auf, der über eine mechanische Ankopplung 2, beispielsweise in Form eines Zahnriementriebes einen Permanentmagnet-Generator 12 antreibt. Dieser ist gekapselt und erfüllt demgemäß mindestens die Schutzklasse IP54. Sein Gehäuse entspricht etwa der Größe der üblichen Lichtmaschine, wie sie in einem solchen Kraftfahrzeug für die gängigen, elektrisch betriebenen Fahrzeugfunktionen zum Einsatz kommt.

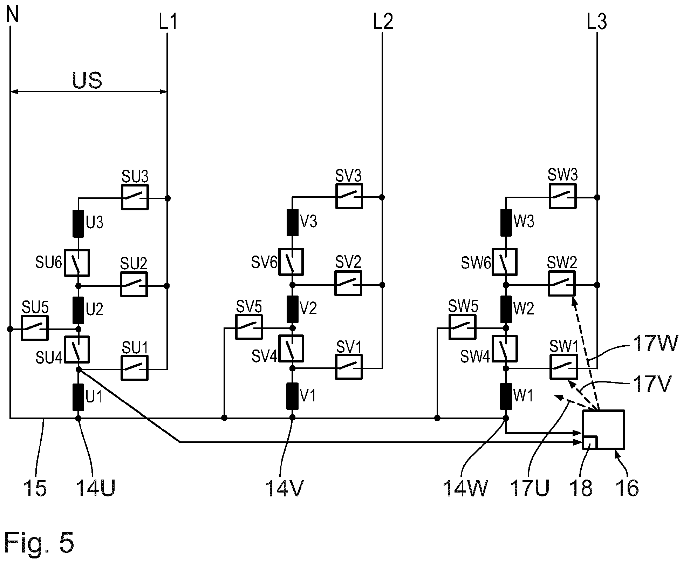

Dem Permanentmagnet-Generator 12 ist eine Umschalteinrichtung 13 nachgeschaltet, die im Folgenden anhand von Fig. 5 noch näher erläutert wird.

Generell erzeugt der Permanentmagnet-Generator 12 an seinem Spannungsausgang 3 eine Ausgangsspannung, die von der Drehzahl des Antriebsmotors 1 abhängig ist. Der Spannungsausgang 3 speist die Umschalteinrichtung 13 und durch deren entsprechende Umschaltlogik wird am Spannungsausgang 3a der Umschalteinrichtung 13 ein im definierten Bereich liegende, für den jeweiligen Einsatzzweck tauglicher Soll-Spannungsbereich ausgegeben.

Bei der Ausführungsform gemäß Fig. 1 ist dem durch die drei Phasenleiter L1, L2, L3 (siehe Fig. 5) gebildeten Spannungsausgang 3 des Permanentmagnet-Generators 12 mit nachgeschalteter Umschalteinrichtung 13 und Spannungsausgang 3a ein Laderegler 4 nachgeschaltet, der eine Batterie 5 mit elektrische Energie versorgt. Mit dieser kann ein Gleichspannungsverbraucher 6 im Kraftfahrzeug betrieben werden.

In Fig. 2 ist am Spannungsausgang 3 des Generators 12 wiederum die Umschalteinrichtung 13 mit Spannungsausgang 3a und an letzterem ein Inverter 7 angeschlossen, mit dem eine in Frequenz und Spannungswert netzkonforme Spannung erzeugt wird. Dadurch kann ein beliebiger Wechselspannungsverbraucher 8 im Kraftfahrzeug betrieben werden.

Im Ausführungsbeispiel gemäß Fig. 3 ist an den Spannungsausgang 3 des Permanentmagnet-Generators 12 mit nachgeschalteter Umschalteinrichtung 13 und Spannungsausgang 3a direkt ein Kühlaggregat 9 in einem Laderaum des Kraftfahrzeuges angeschlossen. Trotz der abhängig von der Drehzahl des Antriebsmotors 1 relativ veränderlichen Ausgangsspannung des Generators 12 kann mithilfe der Umschalteinrichtung 13 ein Soll-Spannungsbereich erreicht werden, in dem das bezüglich seiner Speisespannung unkritische Kühlaggregat 9 problemlos betrieben werden kann. Die entsprechenden Leistungsschwankungen sind für dessen Funktion unkritisch.

In dem weiteren Ausführungsbeispiel gemäß Fig. 4 schließlich versorgt der Spannungsausgang 3 des Permanentmagnet-Generators 12 mit nachgeschalteter Umschalteinrichtung 13 mit Spannungsausgang 3a einen Gleichspannungsregler 10, mit dem eine konstante Gleichspannung erzeugt werden kann. Diese kann von einem Gerät mit einem entsprechenden Gleichspannungseingang, wie beispielsweise einem DC-Bussystem 11 des Kraftfahrzeuges verwendet werden.

Anhand von Fig. 5 wird nunmehr der Aufbau des Permanentmagnet-Generators 12 mit der entsprechend zugeordneten Umschalteinrichtung 13 näher erläutert.

So zeigt Fig. 5 den Neutralleiter N sowie die drei Phasenleiter L1, L2, L3 des Generators 12. Dessen Drehspannungswicklungspaket weist drei jeweils einer Phase zugeordneten Drehspannungswicklungen U, V, W auf, die wiederum jeweils in drei Unterwicklungen U1, U2, U3; V1, V2, V3; W1, W2, W3 unterteilt sind. Die Eingangsanschlüsse 14U, 14V, 14W der jeweils ersten Unterwicklung U1, V1, W1 sind jeweils mit dem Sternpunkt 15 der sternförmig verschalteten Drehspannungswicklungen U, V, W verbunden. Ferner sind alle weiteren Anschlüsse (aus Übersichtlichkeitsgründen ohne Bezugszeichen) der Unterwicklungen U1, U2, U3; V1, V2, V3; W1, W2, W3 aus dem eigentlichen Permanentmagnet-Generator 12 herausgeführt und über getrennt ansteuerbare, eine Umschalteinrichtung 13 bildende Schalter SU1 - SU6; SV1 - SV6; SW1 - SW6 durch Ein-, Aus- und/oder Zusammenschalten von einzelnen oder Gruppen der jeweiligen Unterwicklungen U1, U2, U3; V1, V2, V3; W1, W2, W3 selektiv mit dem Neutralleiter N bzw. den Phasenleitern L1, L2, L3 zu verbinden.

Die Ansteuerung dieser Umschalteinrichtung 13 erfolgt durch eine Steuereinrichtung 16, die über gestrichelt summarisch angedeutete Steuerleitungen 17U, 17V, 17W auf die beispielsweise als Halbleiterrelais ausgelegten Schalter SU1 - SU6; SV1 - SV6; SW1 - SW6 zugreifen. Zur Erfassung des Betriebszustandes des Antriebsmotors 6 ist eine Erfassungseinrichtung 18 beispielsweise in Form eines Messsensors vorgesehen, mit dessen Hilfe das an der Unterwicklung U1 bei laufendem Antriebsmotor 6 erzeugte Spannungssignal in seiner für die Drehzahl des Motors repräsentativen Frequenz und Spannungshöhe ermittelt wird.

Im Folgenden wird anhand der Fig. 5 der Aufbau der Unterwicklungen U, V, W und deren Beschaltung am Beispiel der Unterwicklung U näher erläutert. Diese Erläuterung ist entsprechend auf die beiden anderen Unterwicklungen V, W übertragbar.

So sind die seriell hintereinandergeschalteten Unterwicklungen U1, U2, U3 mit unterschiedlichen Windungszahlen versehen, beispielsweise die Unterwicklung U1 mit 10 Windungen und die Unterwicklungen U2, U3 mit jeweils 5 Windungen. Die Unterwicklungen U1, U2, U3 sind ferner jeweils ausgangsseitig über Schalter SU1, SU2, SU3 mit dem Phasenleiter L1 verbunden. Nach den jeweiligen Abzweigpunkten der Schalter SU1, SU2 sind zwischen den Unterwicklungen U1 und U2 bzw. U2 und U3 Schalter SU4 und SU6 eingesetzt. Ein letzter Schalter SU5 verbindet den Neutralleiter N mit dem Eingang der mittleren Unterwicklung U2.

Mithilfe des gezeigten Netzwerkes an Unterwicklungen U1, U2; U3 und Schaltern SU1 - SU6 können beispielsweise vier Betriebszustände mit jeweils unterschiedlichen Drehzahlen des Antriebsmotors 6 abgedeckt und eine Ausgangsspannung mit einem Mittenbereich von 230 V zwischen Neutralleiter N und Phasenleiter L1 generiert werden. Die Ausgangsspannung von 230V variiert in ihrer Höhe zwischen den Umschaltpunkten. Dazu sind die Schalter in Abhängigkeit der Drehzahl bzw. der Generatorspannung gemäß der folgenden Tabelle anzusteuern. Die in der Spalte "Angesteuerte Schalter" genannten Schalter sind dabei geschlossen, die anderen, nicht genannten Schalter geöffnet.

| Antriebs-Stufe | Drehzahlbereich N | Mittenbereich der Ausgangsspannung US | Strom durch L1 | Angesteuerte Schalter | Aktive Windungen |
|---|---|---|---|---|---|
| 1 | 1125-1875 | 230 V | 100 % | SU3/SU6/SU4 | 20 |
| 2 | 1875-2250 | 230 V | 100 % | SU4/SU2 | 15 |
| 3 | 2250-3750 | 230 V | 200 % | SU1/SU3/SU6/SU5 | 10 |
| 4 | 3750-7500 | 230 V | 100 % | SU5/SU2 | 5 |

Wie aus der Tabelle deutlich wird, kann der Antriebsmotor 6 von LeerlaufDrehzahl bis Maximal-Drehzahl mit dem Faktor ca. 1:6 betrieben werden. Dabei kann die Spannungsversorgungseinrichtung mit dem Permanentmagnet-Generator 12 und der Umschalttechnik 13 eine Ausgangsspannung um einen Mittenbereich von 230 V liefern, die in ihrer Höhe zwischen den Umschaltpunkten variiert.

## Patentansprüche

1. Elektrische Zusatzversorgungseinrichtung zum Einsatz in Kraftfahrzeugen, umfassend
- einen von einem Antriebsmotor (1) des Kraftfahrzeuges antreibbaren Permanentmagnet-Generator (12),
**gekennzeichnet durch**
- eine Bauweise des Permanentmagnet-Generator (12) mit einer Kapselung in Schutzart IP54 oder höher sowie einer Baugröße entsprechend einer für das jeweilige Kraftfahrzeug üblichen Lichtmaschine,
- ein Drehspannungswicklungspaket des Permanentmagnet-Generators (12), dessen jeweils einer Phase zugeordneten Drehspannungswicklungen (U, V, W) jeweils in Unterwicklungen (U1, U2, U3; V1, V2, V3; W1, W2, W3) unterteilt sind, die untereinander und/oder zu ihrem Phasenanschluss (L1, L2, L3) hin über getrennt ansteuerbare, eine Umschalteinrichtung (13) bildende Schalter (SU1 - SU6; SV1 - SV6; SW1 - SW6) verbunden sind,
- eine Steuereinrichtung (16) zur Ansteuerung der Schalter (SU1 - SU6; SV1 - SV6; SW1 - SW6),
- eine mit der Steuereinrichtung (16) verbundene Erfassungseinrichtung (18) zur zumindest mittelbaren Erfassung des jeweiligen Betriebszustandes des Antriebsmotors (6) oder der Generatorspannung, sowie
- eine Ansteuerung der Schalter (SU1 - SU6; SV1 - SV6; SW1 - SW6) in Abhängigkeit des erfassten Betriebszustandes des Antriebsmotors (6) oder der Generatorspannung derart, dass durch Ein-, Aus- und/oder Zusammenschalten von einzelnen oder Gruppen der jeweiligen Unterwicklungen (U1, U2, U3; V1, V2, V3; W1, W2, W3) der Drehspannungswicklungen (U, V, W) an den Phasenleitern (L1, L2, L3) des Permanentmagnet-Generators (12) eine Ausgangsspannung (US) in einem Soll-Spannungsbereich liegt.

2. Zusatzversorgungseinrichtung nach Anspruch 1, **dadurch gekennzeichnet, dass** die Anschlüsse der Unterwicklungen (U1, U2, U3; V1, V2, V3; W1, W2, W3) aus dem Stator des Permanentmagnet-Generators (12) zu den Schaltern (SU1 - SU6; SV1 - SV6; SW1 - SW6) herausgeführt sind.

3. Zusatzversorgungseinrichtung nach Anspruch 1 oder 2, **dadurch gekennzeichnet, dass** die Drehspannungswicklungen (U, V, W) sternförmig verschaltet sind und deren jeweils erste Unterwicklung (U1; V1; W1) direkt mit dem Sternpunkt (15) verbunden ist.

4. Zusatzversorgungseinrichtung nach einem der vorgenannten Ansprüche, **dadurch gekennzeichnet, dass** die Erfassungseinrichtung (18) die an einer einzelnen Unterwicklung (U1, U2, U3; V1, V2, V3; W1, W2, W3) erzeugte Wechselspannung oder deren Frequenz zur Erfassung des Betriebszustandes des Antriebsmotors (6) erfasst.

5. Zusatzversorgungseinrichtung nach einem der vorgenannten Ansprüche, **dadurch gekennzeichnet, dass** die Drehspannungswicklungen (U, V, W) mit ihren Unterwicklungen (U1, U2, U3; V1, V2, V3; W1, W2, W3) und deren Beschaltung mit den Schaltern (SU1 - SU6; SV1 - SV6; SW1 - SW6) bezüglich der einzelnen Phasen zueinander identisch aufgebaut sind.

6. Zusatzversorgungseinrichtung nach einem der vorgenannten Ansprüche, **dadurch gekennzeichnet, dass** die Schalter (SU1 - SU6; SV1 - SV6; SW1 - SW6) als Halbleiterrelais oder mechanische Schalter/Schütze ausgebildet sind.

7. Zusatzversorgungseinrichtung nach einem der vorgenannten Ansprüche, **dadurch gekennzeichnet, dass** die Drehspannungswicklungen (U, V, W) durch jeweils drei seriell geschaltet Unterwicklungen (U1, U2, U3; V1, V2, V3; W1, W2, W3) gebildet sind, wobei jeweils Schalter (SU1 - SU6; SV1 - SV6; SW1 - SW6) zwischen den Unterwicklungen (U1, U2, U3; V1, V2, V3; W1, W2, W3) und zwischen deren Ausgangsseite und den Phasenleitern (L1, L2, L3) des Permanentmagnet-Generators (12) vorgesehen sind.

8. Zusatzversorgungseinrichtung nach einem der vorgenannten Ansprüche, **dadurch gekennzeichnet, dass** die Unterwicklungen (U1, U2, U3; V1, V2, V3; W1, W2, W3) der Drehspannungswicklungen (U, V, W) unterschiedliche Windungszahlen aufweisen.

9. Zusatzversorgungseinrichtung nach einem der vorgenannten Ansprüche, **dadurch gekennzeichnet, dass** sie zur Speisung eines Ladereglers (4) zur Energieversorgung einer Batterie (5) für einen Gleichspannungsverbraucher (6) verwendbar ist.

10. Zusatzversorgungseinrichtung nach einem der Ansprüche 1 bis 8, **dadurch gekennzeichnet, dass** sie zur Speisung eines Inverters (7) zur Erzeugung einer netzkonformen Spannung für einen Wechselspannungsverbraucher (8) verwendbar ist.

11. Zusatzversorgungseinrichtung nach einem der Ansprüche 1 bis 8, **dadurch gekennzeichnet, dass** sie zur Speisung eines Gleichspannungsreglers (10) zur Erzeugung einer konstanten Gleichspannung, insbesondere für DC-Bussysteme (11), verwendbar ist.

12. Zusatzversorgungseinrichtung nach einem der Ansprüche 1 bis 8, **dadurch gekennzeichnet, dass** sie zur direkten Speisung von Zusatzaggregaten auf Kraftfahrzeugen, vorzugsweise von Kühlaggregaten (9), verwendbar ist.
